# EUROPÄISCHE PATENTSCHRIFT

(11) **EP 1 420 663 B1**
(45) Veröffentlichungstag und Bekanntmachung des Hinweises auf die Patenterteilung: **09.02.2005**
(21) Anmeldenummer: 02797653.9
(22) Anmeldetag: 30.08.2002
(51) Int. Cl.: A45D 44/00

(54) **VERFAHREN FÜR EINE HAARFARBBERATUNG**
METHOD FOR A HAIR COLOUR CONSULTATION
PROCEDE POUR UN CONSEIL EN COULEUR DE CHEVEUX

(30) Priorität: 30.08.2001 DE 10142526
(43) Veröffentlichungstag der Anmeldung: 26.05.2004
(73) Patentinhaber: Wella Aktiengesellschaft, 64274 Darmstadt (DE)
(72) Erfinder: FERTIG, Werner, 64625 Bensheim (DE); MATTINGER, Detlef, 64404 Bickenbach (DE); UHL, Stefan, 64295 Darmstadt (DE)
(86) Internationale Anmeldenummer: PCT/EP2002/009685
(87) Internationale Veröffentlichungsnummer: WO 2003/020072

(56) Entgegenhaltungen:
- EP-A- 1 147 722
- WO-A-01/32051
- US-A- 4 297 724
- US-A- 4 731 743

## Beschreibung

Die Erfindung betrifft ein Verfahren für eine Haarfarbberatung nach der Gattung des Oberbegriffs des Anspruchs 1.

Ein derartiges Verfahren für eine Haarfarbberatung ist beispielsweise aus der EP1147722A1 bekannt, das mit einer statischen, digitalen Portraitaufnahme arbeitet und bei dem wahlweise eine gewünschte Frisurfarbe eingegeben und auf einem Bildschirm (Display) dargestellt wird.

Vor einer Entscheidung zu einer neuen Haarfarbe hat eine Person, beispielsweise eine Friseurkundin, eine Hemmschwelle zu überwinden, weil sie vorher nicht weiß, wie sie nachher aussehen wird. Um hier auch den Friseur bei seiner Beratungstätigkeit zu unterstützen, wird mit dem Haarfarbberatungs-Computersystem nach der EP1147722A1 ein zweidimensionales Bild (Digitalfoto) einer Person mit einer neuen simulierten Haarfarbe versehen und auf einem Bildschirm dargestellt, wobei das Ergebnis statisch und unnatürlich aussieht. Ein Grund, warum die Ergebnisse herkömmlicher Haarfarbberatungs-Computersysteme statisch wirken, ist, dass sie durch ein Stehbild statisch sind. Ein Foto kann kein bewegtes, lebendiges Bild ersetzen, wie es die Person beispielsweise erfährt, wenn sie sich nach der Behandlung im Spiegel betrachtet.

Der Erfindung liegt die Aufgabe zu Grunde, ein gattungsgleiches Verfahren für eine Haarfarbberatung zu schaffen, das die genannten Nachteile nicht aufweist.

Gelöst wird diese Aufgabe nach den Merkmalen des kennzeichnenden Teils des Anspruchs 1. Durch dieses Verfahren für eine Haarfarbberatung ist es möglich, das Ergebnis einer Haarfärbung vor der eigentlichen Farbveränderung zu visualisieren. Im Gegensatz zu bestehenden Haarfarbberatungssystemen basiert es einerseits auf einem dynamischen Videobild und andererseits auf einer Farbveränderung der natürlichen Haare der Person. Das Videobild wird durch das Verfahren in Echtzeit bearbeitet und auf einem Bildschirm wiedergegeben, so dass der Eindruck einer Spiegelbenutzung entsteht. Weitere vorteilhafte Weiterbildungen der Erfindung gehen aus den Unteransprüchen hervor.

Die Erfindung bildet wahlweise ein Betrachten eines seitenrichtigen Bildes oder eines eigenen Spiegelbildes nach. Dazu wird mit einer Videokamera das aktuelle Bild der Person aufgenommen, von einem Computer automatisch bearbeitet und auf einem Bildschirm dargestellt. Durch diese dynamische Darstellung in Echtzeit wird der Bildschirm zum Spiegel. Die Aufgabe des Computers ist, das Ausgangsbild so zu modifizieren, dass das Ergebnis einer Haarfärbung simuliert wird. Zu diesem Zweck muss das Computersystem die Haare der Person selbstständig erkennen und daraufhin deren Farbe nach dessen Vorgaben, bzw. nach den Vorgaben des Friseurs, verändern. Auf diese Weise entsteht ein dynamisches, natürlich wirkendes Simulationsergebnis. Da lediglich das sich bewegendes Eigenhaar umgefärbt wird, entfällt der Effekt von aufgesetzt wirkenden "Computerperücken" mit einer entsprechenden Farbgebung. Die Haare fallen natürlich, sind nicht starr, und die Person kann sich vor dem virtuellen Spiegel bewegen, den Kopf drehen, sich von der Seite betrachten, den Gesichtsausdruck ändern und sich mit der neuen Haarfarbe selbst beurteilen, ob die ausgewählte Wunschhaarfarbe 32 der Erwartung entspricht. Wenn nicht, können sofort andere Wunschhaarfarben 32 simuliert werden.

Die Erfindung wird an Hand eines Ausführungsbeispiels näher beschrieben.

Es zeigt:
- Fig. 1: einen schematischen Ablauf eines Verfahrens für eine Haarfarbberatung als ein Haarfarbberatungssystem;
- Fig. 2: einen schematischen Ablauf eines Verfahrens für eine Haarfarbberatung mit einem Bildschirm in einer Spiegelbilddarstellung einer Person;
- Fig. 3: einen Bildschirm bzw. Touchscreen mit einer Farbpalette bzw. Farbkreisflächenspektrum, und
- Fig. 4: ein Flussdiagramm des Verfahrens.

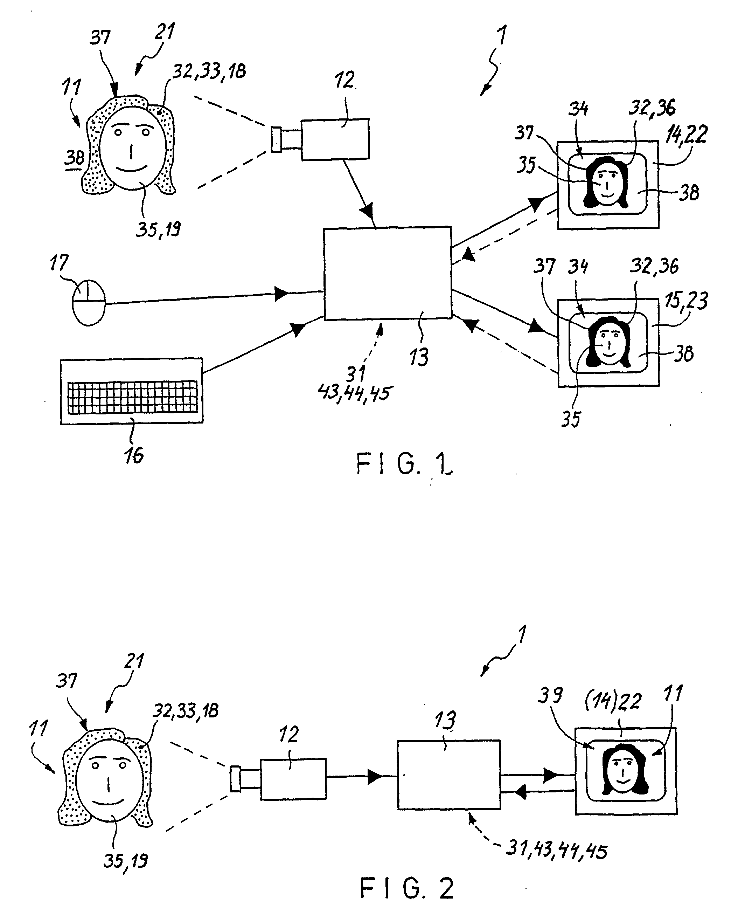

Die Fig. 1 zeigt einen schematischen Ablauf eines Verfahrens für eine Haarfarbberatung als ein Haarfarbberatungssystem 1, bei dem mittels einer Videokamera 12, eines Computers 13 und mindestens eines Bildschirms 14 bzw. Touchscreen 22 eine Auswahl und Darstellung einer gewünschten Haarfarbe 36 einer Person 11 auf dem Bildschirm/ Touchscreen 14,22 dargestellt wird, wobei aktuelle Einzelbilder 21 der Person 11 von der Videokamera 12 kontinuierlich aufgenommen werden. Diese kontinuierliche Bildfolge von Einzelbildern 21 der Videokamera 12 wird in Echtzeit an den Computer 13 übertragen. Dort wird für jedes Einzelbild 21 mittels einer Einrichtung 31 eine automatische Bildbearbeitung und Bildverarbeitung durchgeführt, bei der der Computer 13 einen Haarbereich 32 der Person 11 durch Segmentierung identifiziert, was eine Erkennung und Trennung von relevanten Bildbereichen bedeutet sowie auch deren natürliche Haarfarbe 33, die Haarfarbe 33 dieses Haarbereiches 32 nach vorgegebenen Spezifikationen ändert und die veränderten Einzelbilder 21 wiederum in Echtzeit auf mindestens einem Bildschirm 14, 15 bzw. Touchscreen 22,23 darstellt. Echtzeit bedeutet in diesem Kontext: mit einer von der Person 11 nicht oder kaum wahrnehmbaren Zeitverzögerung zwischen den einzelnen Bildaufnahmen 21 und der Darstellung am Bildschirm 14, 15 bzw. Touchscreen 22,23 mit einer flüssigen Darstellung der Bewegungen. Daraus folgt unter anderem auch eine minimale Bildrate von ungefähr zehn Einzelbildern 21 pro Sekunde.

Vor einer eigentlichen Simulation mit einer neuen Wunschhaarfarbe 36 werden dem Computer 13 gewisse Anfangsparameter mitgeteilt (Initialisierung). Hierzu verarbeitet die Einrichtung 31 kontinuierlich und automatisch manuell eingegebene Anfangsparameter eines Bildbereichs 34, wobei als mindestens ein Anfangsparameter ein Haarbereich 32 markiert und von einer wahlweisen Wunschhaarfarbe 36 besetzt wird. Als weitere Kombinationen von Anfangsparametern können vorgesehen werden, bei welchen Bildbereichen 34 es sich um einen Haarbereich 32 und um einen Hautgrund 35 handelt, und wodurch diese charakterisiert werden (Farbtöne, Textur, Morphologie usw.), welche (natürliche) Ausgangshaarfarbe 33 vorherrscht und welche Farbe (Wunschhaarfarbe 36) gewünscht wird. Das kann über Anwählen oder Maskieren von Bildbereichen 34 oder Schaltflächen eines oder mehrerer Bedienmenüs auf dem Bildschirm 14, 15 bzw. Touchscreen 22,23 geschehen. Die zu diesem Zweck erforderlichen Eingabegeräte können beispielsweise als Maus 17 oder ähnliches (Trackball, Touchpad usw.), als Tastatur 16 oder/und als mindestens ein Touchscreen 22,23 vorgesehen werden. Die Initialisierungsphase kann unter anderem nötig sein, um dem Computer 13 mitzuteilen, welche Bildbereiche 34 des Haarbereichs 32 die Frisur 37 darstellen, die vom restlichen Bild separiert und umgefärbt werden soll. Dies kann beispielsweise dadurch geschehen, dass der Benutzer mindestens in einem der Bildbereiche 34 das Haar 18, die Haut 19 und einen Hintergrund 38 einen oder mehrere Punkte oder einen oder mehrere Bereiche markiert. Es ist außerdem möglich, dass Bereiche markiert werden, die explizit nicht umgefärbt werden sollen, wie z. B. Augenbrauen, Koteletten oder Bart. Um dem Computer 13 die Erkennung der Haarbereiche 32 zu erleichtern und die Fehleranfälligkeit des Haarfarbberatungssystems 1 gering zu halten, ist es vorteilhaft, ein Bild von einer Person 11 vor einem homogenen, einfarbigen Hintergrund 38 mit möglichst einer definierten Beleuchtung aufzunehmen.

Der Haarbereich 32 wird durch eine automatische Analyse naheliegender und ähnlicher Pixelfarbwerte kontinuierlich markiert und von der Wunschhaarfarbe 36 entsprechend besetzt, woraus sich ein einfaches Nachführverfahren des durch Bewegung der Person 11 sich laufend ändernden Haarbereichs 32 ergibt. Hierzu wird zur Analyse naheliegender und ähnlicher Pixelfarbwerte ein repräsentativer Teilbereich des Haarbereichs 32 manuell ausgewählt und dann die automatische Analyse gestartet, wodurch die Einrichtung 31 zur kontinuierlichen Bildbearbeitung lediglich den Haarbereich 32 mit der Wunschhaarfarbe 36 zu bearbeiten hat. Dieser automatischen Markierung liegt die Überlegung zu Grunde, dass die Ausgangshaarfarbe 33 im Haarbereich 32 eine zusammenhängende Fläche naheliegender und ähnlicher Pixelfarbwerte aufweist, die sich vom übrigen Bildbereich 34 deutlich differenzieren lassen.

Der Haarbereich 32 kann aber wahlweise durch eine automatische Analyse einer zusammenhängender Textur oder/und zusammenhängender geomorphologischer Eigenschaften kontinuierlich markiert werden, um den übrigen Bildbereich 34 deutlich zu differenzieren.

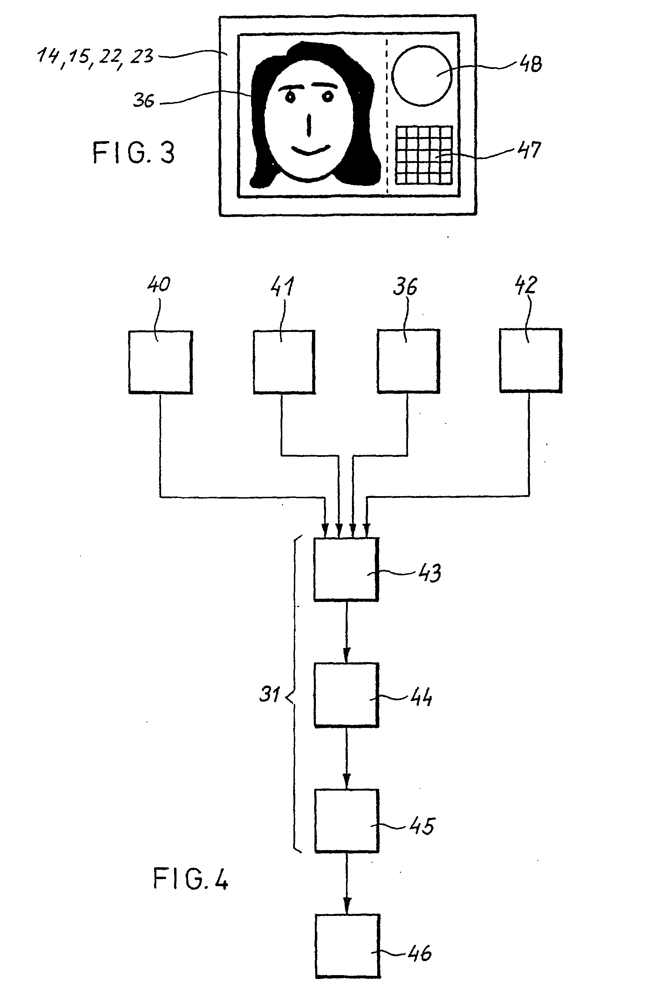

Je nach Anwendungsbereich (Friseur/Retail) kann außer der Person 11 auch ein Berater, zum Beispiel ein Friseur, anwesend sein. In diesem Fall ist es sinnvoll, wenn der Friseur für die Programmbedienung und Initialisierung einen eigenen, zweiten Bildschirm 15 bzw. Touchscreen 23 zur Verfügung hat. Auf diesem zweiten Bildschirm 15 bzw. Touchscreen 23 können zusätzlich zu dem Kamerabild für die Bedienung wichtige Informationen dargestellt werden, zum Beispiel die Farbpalette 47 (Fig. 3) der Zielhaarfarben (Wunschfarbe 36), so dass auf dem ersten Bildschirm 14 bzw. Touchscreen 22 für die Person 11 nur das Simulationsergebnis sichtbar zu sein braucht. Der Touchscreen 22,23 hat den Vorteil, dass weitere Eingabegeräte überflüssig sind, da entsprechende Bedienmenüs oder Schaltflächen direkt durch Antippen mit einem Finger oder Stift auf der Touchscreen-Oberfläche aktiviert werden.

In einer bevorzugten Ausführung werden die kontinuierlichen Videobilder der Person 11 vom Computer 13 stetig um eine vertikale Achse gespiegelt auf dem Bildschirm 14 als ein Spiegelbild 39 dargestellt (Fig. 2). Dadurch wird der Eindruck erzeugt, als betrachte man sich in einem Spiegel, was den alltäglichen Gewohnheiten entgegen kommt und den ungezwungenen Umgang mit dem Haarfarbberatungssystem 1 fördert. Um eine Parallaxe zwischen der Videokamera 12 und dem Bildschirm 14,15 bzw. Touchscreen 22,23 zu minimieren, sollte die Videokamera 12 dicht am oberen Rand des Bildschirms 14,15,22,23 positioniert sein, wie beispielsweise nach der DE19635753A1, Fig. 4. Im Idealfall fällt die optische Achse des Videobildes 34 mit der optischen Achse des Bildschirms 14,15 bzw. Touchscreen 22,23 zusammen, um die Parallaxe vollständig zu vermeiden. Eine entsprechende Lösung ist beispielsweise auch in der DE19635753A1 zu Fig. 5 beschrieben. Um den Effekt eines Spiegels zu perfektionieren, sollte der Abbildungsmaßstab von der Person 11 und des Bildschirms 14,15 bzw. Touchscreen 22,23 ungefähr 1:1 sein.

In einer besonderen Ausbildung ist vorgesehen, die Haarfarbe 33 kontinuierlich und in einem Zyklus nach einem Farbkreisflächenspektrum 48 (Fig. 3) zu verändern, wobei ein Start oder Stopp dieser laufenden Farbveränderung vorgesehen ist. Dadurch entfällt eine gezielte Eingabe einer Wunschhaarfarbe 36 aus einer Farbpalette 47, da in dem Moment, wo eine Person 11 glaubt, einen zu ihr passenden Farbton gefunden zu haben, die laufende Farbveränderung einfach stoppt und auch noch in diesem Bereich den gestoppten Farbton manuell verschieben kann, bis die eigentliche Wunschhaarfarbe 36 getroffen ist. Der Zyklus der laufenden Farbveränderung ist in seiner Wiederholfrequenz frei wählbar, wodurch dieser individuell an eine Person 11 angepasst werden kann. Diese laufende Farbveränderung eignet sich auch besonders gut für eine werbewirksame Demonstration für eine Haarfarbveränderung einer Kundin 11 in beispielsweise einem Drogeriemarkt, wobei wahlweise zur Werbung ein entsprechender Videofilm auf dem Bildschirm 14,15 gezeigt werden kann.

In der Fig. 4 ist ein schematisches Flussdiagramm des Verfahrens dargestellt. Neben einer Eingabe einer Bildaufnahme 40, wobei es ein bewegtes Videobild oder zunächst nur ein Einzelbild 21 sein kann, ist gegebenenfalls eine Eingabe von Zusatzinformationen 41 (beispielsweise vom Friseur bestimmte Ausgangshaarfarbe der Kundin und/oder der Grauanteil, aber auch allgemeine Kundendaten) vorgesehen sowie eine Eingabe einer Auswahl einer Wunschhaarfarbe 36 und eine Eingabe einer Markierung 42 mindestens eines Bildbereichs 34, wobei die Reihenfolge beliebig ist. Diese Daten fließen in eine Initialisierungseinrichtung 43 ein, in der das Verfahren gestartet wird und in eine Segmentierungseinrichtung 44 einfließen, in der eine Erkennung und Trennung von relevanten Bildbereichen 34 erfolgt. Nach einer Transformation der Ausgangshaarfarbe 33 in die vorgegebene Wunschhaarfarbe 36 in einer Farbtransformationseinrichtung 45 erfolgt eine entsprechende Bilddarstellung 46 eines Einzelbildes 21 einer Person 11 mit der Wunschhaarfarbe 36 auf einem Bildschirm 14,15 bzw. Touchscreen 22,23. Die nächstfolgenden Einzelbilder 21 der Videoaufnahme werden entsprechendend verarbeitet und fortlaufend dargestellt, wobei eine Bildwiedergabefrequenz von ungefähr 10 bis 30 Bilder pro Sekunde vorgesehen ist, wodurch ein fließendes, bewegtes Bild entsteht. Es kann aber auch vorgesehen werden, dass lediglich eine Wunschhaarfarbe 36 zur Initialisierung ausreicht, wenn die übrigen Parameter bzw. Spezifikationen automatisch erfasst und verarbeitet werden.

Da nur ein Teilaspekt des realen Bildes modifiziert wird, gibt es keine Diskrepanzen zwischen realen und virtuellen Bildelementen, wie beispielsweise Winkel- und Positionsungenauigkeiten, unterschiedlicher Beleuchtung der verschiedenen Bildelemente, Skalierungsfehler usw. Auch gibt es keine Verdeckungsproblematik, da nicht berechnet werden muss, welche Teile des virtuellen Bildelements vom realen Bild verdeckt werden. Da das reale Bild nur in der Farbe verändert wird, verhält sich das Haar einer Person automatisch physikalisch korrekt, was eine natürliche Wirkung auch einer Bewegung der Person bei der Wiedergabe auf dem Bildschirm bzw. Touchscreen bewirkt.

### Bezugszeichenliste:

- 1: Haarfarbberatungssystem
- 11: Person
- 12: Videokamera
- 13: Computer
- 14: Erster Bildschirm
- 15: Zweiter Bildschirm
- 16: Eingabetastatur
- 17: Maus
- 18: Haar
- 19: Haut
- 21: Einzelbild
- 22: Erster Touchscreen
- 23: Zweiter Touchscreen
- 31: Einrichtung
- 32: Haarbereich
- 33: Ausgangshaarfarbe
- 34: Bildbereich
- 35: Hautgrund
- 36: Wunschhaarfarbe
- 37: Frisur
- 38: Hintergrund
- 39: Spiegelbild
- 40: Bildaufnahme
- 41: Zusatzinformationen
- 42: Markierung
- 43: Initialisierungseinrichtung
- 44: Segmentierungseinrichtung
- 45: Farbtransformationseinrichtung
- 46: Bilddarstellung
- 47: Farbpalette
- 48: Farbkreisflächenspektrum

## Patentansprüche

1. Verfahren für eine Haarfarbberatung beziehungsweise Haarfarbsimulation, bei dem mittels einer Videokamera, eines Computers und mindestens eines Bildschirms eine Auswahl einer gewünschten Haarfarbe einer Person auf dem Bildschirm dargestellt wird, **dadurch gekennzeichnet, dass** aktuelle Einzelbilder (21) von der Person (11) mittels der Videokamera (12) kontinuierlich aufgenommen und in einer kontinuierlichen Bildfolge in den Computer (13) in Echtzeit übertragen werden, wobei für jedes Einzelbild (21) mittels einer Einrichtung (31) eine automatische Bildbearbeitung und Bildverarbeitung durchgeführt wird, bei der der Computer (13) einen Haarbereich (32) der Person (11) identifiziert, die Haarfarbe (33) dieses Haarbereichs (32) nach vorgegebenen Spezifikationen ändert und die veränderten Einzelbilder (21) wiederum in Echtzeit auf mindestens einem Bildschirm (14, 15) oder/und Touchscreen (22,23) dargestellt werden.

2. Verfahren nach Anspruch 1, **dadurch gekennzeichnet, dass** die Einrichtung (31) manuell eingegebene Anfangsparameter eines Bildbereiches (34) zur Initialisierung kontinuierlich automatisch verarbeitet, wobei als mindestens ein Anfangsparameter der Haarbereich (32) markiert und von einer wahlweisen Wunschhaarfarbe (36) besetzt wird.

3. Verfahren nach Anspruch 2, **dadurch gekennzeichnet, dass** der Haarbereich (32) durch eine automatische Analyse naheliegender und ähnlicher Pixelfarbwerte der Ausgangshaarfarbe (33) kontinuierlich markiert wird.

4. Verfahren nach Anspruch 2, **dadurch gekennzeichnet, dass** der Haarbereich (32) durch eine automatische Analyse einer zusammenhängender Textur oder/und zusammenhängender geomorphologischer Eigenschaften kontinuierlich markiert wird.

5. Verfahren nach mindestens Anspruch 1, **dadurch gekennzeichnet, dass** die Wunschhaarfarbe (36) wahlweise von mindestens einem Touchscreen (22,23) oder/und von mindestens einem Bildschirm (14,15) durch eine Eingabetastatur (16) oder durch eine Maus (17) in den Computer (13) eingegeben wird.

6. Verfahren nach mindestens Anspruch 1, **dadurch gekennzeichnet, dass** die Bildfolge von mehreren Einzelbildern (21) mindestens vom Bildschirm (14) für die Kundin (11) als ein Spiegelbild (39) dargestellt wird.

7. Verfahren nach mindestens Anspruch 1, **dadurch gekennzeichnet, dass** die Haarfarbe (33) kontinuierlich und in einem Zyklus nach einem Farbkreisflächenspektrum (48) verändert wird, wobei ein Start oder Stopp dieser laufenden Farbveränderung vorgesehen ist.

8. Verfahren nach Anspruch 7, **dadurch gekennzeichnet, dass** der Zyklus in seiner Wiederholfrequenz frei wählbar ist.

## Claims

1. Method for a hair colour consultation or hair colour simulation, in which, by means of a video camera, a computer and at least one screen, a selection of a desired hair colour of a person is represented on the screen, **characterized in that** current individual images (21) of the person (11) are continuously recorded by means of the video camera (12) and transmitted in a continuous image sequence into the computer (13) in real time, a device (31) being used to carry out an automatic image editing and image processing for each individual image (21), during which the computer (13) identifies a hair region (32) of the person (11) and changes the hair colour (33) of this hair region (32) according to predetermined specifications, and the altered individual images (21) are represented on at least one screen (14, 15) and/or touchscreen (22, 23) once again in real time.

2. Method according to Claim 1, **characterized in that** the device (31) continuously automatically processes manually input initial parameters of an image region (34) for initialization, the hair region (32) being marked as at least one initial parameter and being occupied by an optional desired hair colour (36).

3. Method according to Claim 2, **characterized in that** the hair region (32) is continuously marked by an automatic analysis of close and similar pixel colour values of the initial hair colour (33).

4. Method according to Claim 2, **characterized in that** the hair region (32) is continuously marked by an automatic analysis of a contiguous texture and/or contiguous geomorphological properties.

5. Method according to at least Claim 1, **characterized in that** the desired hair colour (36) is optionally input into the computer (13) from at least one touchscreen (22, 23) and/or from at least one screen (14, 15) by means of an input keyboard (16) or by means of a mouse (17).

6. Method according to at least Claim 1, **characterized in that** the image sequence of a plurality of individual images (21) is represented as a mirror image (39) for the customer (11) at least by the screen (14).

7. Method according to at least Claim 1, **characterized in that** the hair colour (33) is altered continuously and in a cycle according to a chromatic circle area spectrum (48), a start or stop of this proceeding colour alteration being provided.

8. Method according to Claim 7, **characterized in that** the repetition frequency of the cycle is freely selectable.

## Revendications

1. Procédé pour un conseil en couleur de cheveux ou une simulation de couleur de cheveux avec lequel une sélection d'une couleur de cheveux souhaitée par une personne est représentée à l'écran au moyen d'une caméra vidéo, d'un ordinateur et d'au moins un écran, **caractérisé en ce que** des images individuelles (21) actuelles de la personne (11) sont enregistrées continuellement au moyen de la caméra vidéo (12) et sont transmises en temps réel dans l'ordinateur (13) dans une séquence d'images continue, un traitement d'image automatique et un conditionnement d'image étant effectué pour chaque image individuelle (21) au moyen d'un dispositif (31) au cours duquel l'ordinateur (13) identifie une zone de cheveux (32) de la personne (11), modifie la couleur des cheveux (33) de cette zone de cheveux (32) d'après les spécifications prédéfinies et représente les images individuelles (21) modifiées, de nouveau en temps réel, sur au moins un écran (14, 15) et/ou un écran tactile (22, 23).

2. Procédé selon la revendication 1, **caractérisé en ce que** le dispositif (31) traite automatiquement et continuellement des paramètres saisis manuellement d'une zone d'image (34) en vue de l'initialisation, au moins un paramètre initial de la zone de cheveux (32) étant marqué et recevant une couleur de cheveux souhaitée (36) au choix.

3. Procédé selon la revendication 2, **caractérisé en ce que** la zone de cheveux (32) est marquée continuellement par une analyse automatique des valeurs des couleurs des pixels voisins et similaires de la couleur des cheveux initiale (33).

4. Procédé selon la revendication 2, **caractérisé en ce que** la zone de cheveux (32) est marquée continuellement par une analyse automatique d'une texture cohérente et/ou de propriétés géomorphologiques cohérentes.

5. Procédé selon au moins la revendication 1, **caractérisé en ce que** la couleur de cheveux souhaitée (36) est saisie dans l'ordinateur (13) au choix, par au moins un écran tactile (22, 23) et/ou par au moins un écran (14, 15) par le biais d'un clavier de saisie (16) ou d'une souris (17).

6. Procédé selon au moins la revendication 1, **caractérisé en ce que** la séquence d'images composée de plusieurs images individuelles (21) est représentée au moins par l'écran (14) sous la forme d'un image en miroir (39) pour la cliente (11).

7. Procédé selon au moins la revendication 1, **caractérisé en ce que** la couleur de cheveux (33) est modifiée continuellement et dans un cycle d'après un spectre de surfaces de cercle chromatique (48), un démarrage et un arrêt de cette modification continue de la couleur étant prévus.

8. Procédé selon la revendication 7, **caractérisé en ce que** la fréquence de répétition du cycle peut être choisie librement.
